# EUROPEAN PATENT APPLICATION

(11) **EP 2 682 881 A2**
(43) Date of publication of application: **08.01.2014**
(21) Application number: 13172935.2
(22) Date of filing: 20.06.2013
(51) Int. Cl.: G06F 17/30, G06K 9/00

(54) **Document Processing Apparatus, Image Processing Apparatus, Document Processing Method, and Medium**

(30) Priority: 05.07.2012 JP 2012151256
(71) Applicant: Ricoh Company, Ltd., Tokyo 143-8555 (JP)
(72) Inventor: Ohguro, Yoshihisa, Tokyo, 143-8555 (JP)
(74) Representative: Schwabe - Sandmair - Marx

(57) **Abstract**

In a document processing apparatus (1), an OCR unit (13) extracts character information from document image data scanned by a document scanner (12), a title generator (14) extracts a predefined number of strings that indicate the characteristic of the document image data as a title string from the character information extracted by the OCR unit (13), and a document name generator (15) generates a string suitable for a predefined output condition as the document name from the title strings extracted by the title generator (14).

## Description

### BACKGROUND

### Technical Field

The present invention relates to a document processing apparatus, an image processing apparatus, and document processing method.

### Background Art

Sometimes, imported document image data does not have a document name, and it is necessary to give document image data that a scanner generates by scanning a paper document a document name, store the data, and manage it in order to make good use of it.

Conventionally, a method to generate scanned date and time or a predefined serial number and give it to imported document image data as a document name has been widely used. However, it can be difficult to ascertain the contents of document image data whose document name includes only a date and time or a serial number, limiting the utility of the document image data.

Also, conventionally, a method to input a document name that corresponds to the content of the imported document image data by user operation has been widely used. In this case, it is easy to ascertain the content of the document image data from the document name. However, user utility deteriorates if the amount of document image data increases.

Consequently, various technologies for extracting a title that corresponds to the content of document image data from the document image data have been proposed (e.g., JP-2007-122403-A, JP-2002-297629-A, and JP-2008-077454-A). However, in these technologies, while a title string suitable for the content of the document image data can be extracted from the document image data itself, availability of the extracted document name is not considered,

That is, the purpose of giving a document title to document image data is to improve document accessibility by enabling quick and accurate searching of document image data stored in nonvolatile memory, etc., by the document title and reutilizing the specified document image data. Such searching of document image data based on the document name is executed by displaying the document name on a display unit, monitor, etc.

However, in outputting a document name, a displayable number of characters and lines in a display area of a document name are usually limited. Consequently, if the document name is too long to fit into the display area, the document name can be garbled. Therefore, there is a need to improve the process of generating an appropriate document name.

### SUMMARY

The present invention provides a novel document processing apparatus, image processing apparatus, and document processing method that generates a document name that expresses content of document image data in accordance with an output condition.

More specifically, the present invention provides a document processing apparatus that includes a character information extractor that extracts character information from document image data, a characteristic string extractor that extracts a predefined number of strings that indicate the characteristic of the document image data as a candidate string for a document name from the character information extracted by the character information extractor, and a document name generator that generates a string suitable for a predefined output condition as the document name from the candidate string for the document name extracted by the characteristic string extractor.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a block diagram illustrating a configuration of the main parts of a document processing apparatus as an embodiment of the present invention.
FIG. 2 is a flowchart illustrating a process of processing a document as an embodiment of the present invention.
FIG. 3 is a diagram illustrating examples of document image data processed by the document processing apparatus.
FIG. 4 is a flowchart illustrating a process of generating a document name to adopt a string as the document name up to the limit number of characters as an embodiment of the present invention.
FIG. 5 is a block diagram illustrating a configuration of the main parts of a computer apparatus that processes a document.
FIG. 6 is a schematic diagram illustrating a configuration of a document processing system in which multiple apparatuses cooperate to process a document.
FIG. 7 is a block diagram illustrating a configuration of a document processing apparatus as a second embodiment of the present invention.
FIG. 8 is a block diagram illustrating a configuration of a document name generator that generates a document name in ASCII character format.

### DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

### First embodiment

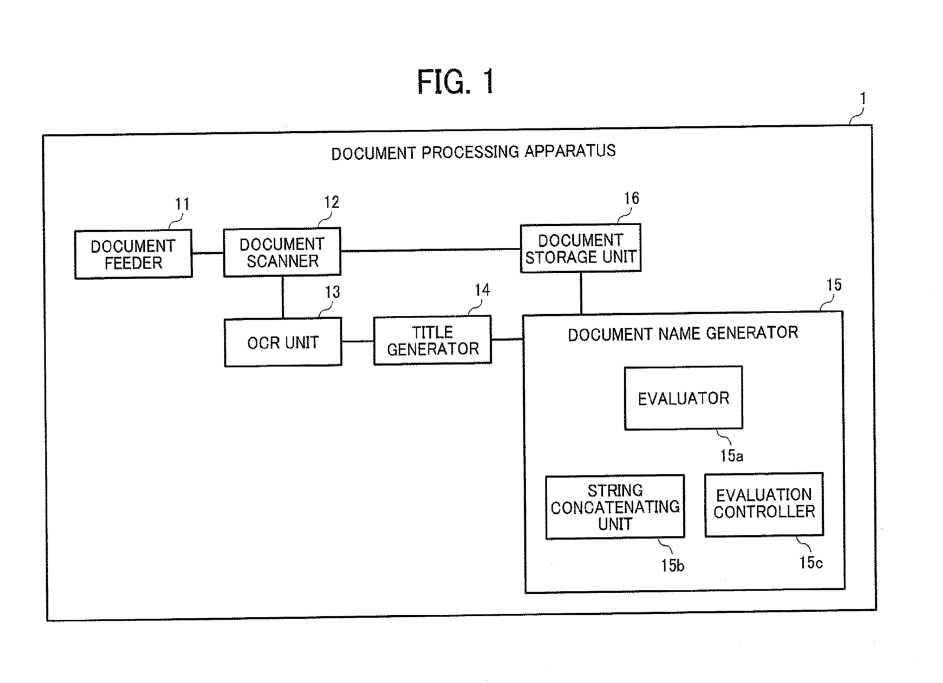

A first embodiment of the present invention will be described in detail below with reference to the drawings from FIG. 1 to FIG. 6.

FIG. 1 is a block diagram illustrating a configuration of a substantial part of a document processing apparatus. In FIG. 1, a document processing apparatus 1 can be applied to various apparatuses that handle document image data, such as a copier, a multifunctional peripheral (MFP), a scanner, a computer apparatus, and a book reader. A document feeder 11, a document scanner 12, an OCR unit 13, a title generator 14, a document name generator 15, and a document storage unit 16 are implemented by installing a document processing program that executes a document processing method of the present invention on nonvolatile memory.

That is, the document processing apparatus 1 executes a document processing method (described in detail later) to generate a document name that expresses content of imported document image data by reading a document processing program that executes a document processing method of the present invention stored on computer-readable recording media, including but not limited to ROM, Electrically Erasable and Programmable Read Only Memory (EEPROM), EPROM, flash memory, flexible disk, Compact Disc Read Only Memory (CD-ROM), Compact Disk Rewritable (CD-RW), Digital Versatile Disk (DVD), Secure Digital (SD) card, and Magneto-Optical Disk (MO), and installing the document processing program in nonvolatile memory such as the ROM or a hard disk drive. The document processing program is a computer-executable program written in legacy programming languages and object oriented programming languages such as assembler, C, C++, C#, and Java, and can be distributed stored on the recording media described above.

The document feeder 11 can hold a paper document comprised of multiple pages, and the document feeder 11 separates the held paper document and carries a sheet one by one into the document scanner 12.

The document scanner 12 includes an image scanner that uses a Charge Coupled Device (CCD) or Complementary Metal Oxide Semiconductor (CMOS), scans the paper document carried from the document feeder 11 at a predefined resolution, digitizes it, and outputs it to the document storage unit 16 and the OCR unit 13.

The OCR unit 13 reads character data from image data of the paper document scanned by the document scanner 12, adds additional information such as character image location corresponding to the character data, character recognition score, and language processing result (location of word to which a character belongs and grammatical information such as word class) to the character data, and outputs it to the title generator 14. That is, the OCR unit 13 functions as a character information extractor that extracts character information from the document image data scanned by the document scanner 12.

It should be noted that, while the document processing apparatus 1 in this embodiment imports document image data by scanning a paper document using the document scanner 12, the method to import document image data is not limited thereto. For example, document image data can be imported by receiving document image data from a scanner that scans a paper document, a copier, a MFP, or a computer apparatus that store document image data via a network and a network I/F.

The title generator 14 extracts a string that expresses content of a page characteristically (hereinafter referred to as "title string") for each page of the document image data from the character data and the additional information input from the OCR unit 13 and outputs it to the document name generator 15. That is, the title generator 14 functions as a characteristic string extractor that extracts a string with a predefined number of characters that indicates characteristic of the document image data as the title string (document name candidate string) from the character data and the additional information as character information extracted by the OCR unit 13.

Existing methods to extract a title can be used by the title generator 14 to extract a title. For example, a method to determine title likelihood or caption likelihood with reference to information on existing position of text in the additional information received from the OCR unit 13 (since a page title or a caption usually exists in the upper part of the page in large font), a method to adopt a string with less grammatical deviation after analyzing text as the OCR result grammatically using the additional information (since text that includes a meaningful word is usually more useful than a meaningless string), or a method to generate a short text that expresses the page simply after evaluating multiple elements such as text positional information and grammatical analyzing result comprehensively can be adopted for that purpose. The title generator 14 executes this characteristic string extracting process for each page of the document image data.

The document name generator 15 generates a string suitable for a predefined output condition as a document name from the title string generated by the title generator 14 and outputs it to the document storage unit 16. That is, the document name generator 15 functions as a document name generator that generates a string suitable for a predefined output condition as a document name from the title string extracted by the title generator 14.

The document storage unit 16 includes large capacity nonvolatile memory such as a hard disk drive, associates the document image data input from the document scanner 12 with the document name generated by the document name generator 15, and stores and manages them in the nonvolatile memory.

As described above, the document processing apparatus 1 can be applied to an image processing apparatus such as a scanner, a copier, and a MFP, and outputs the document name of the document image data stored in the document storage unit 16 on the control panel of the image processing apparatus.

After recognizing the content of the document image data from the document name displayed on the control panel and selecting the document image data with the intended document name by user operation on the control panel, the image processing apparatus executes processes such as displaying, printing, and transferring the selected document image data to other apparatus in response to user operation on the control panel.

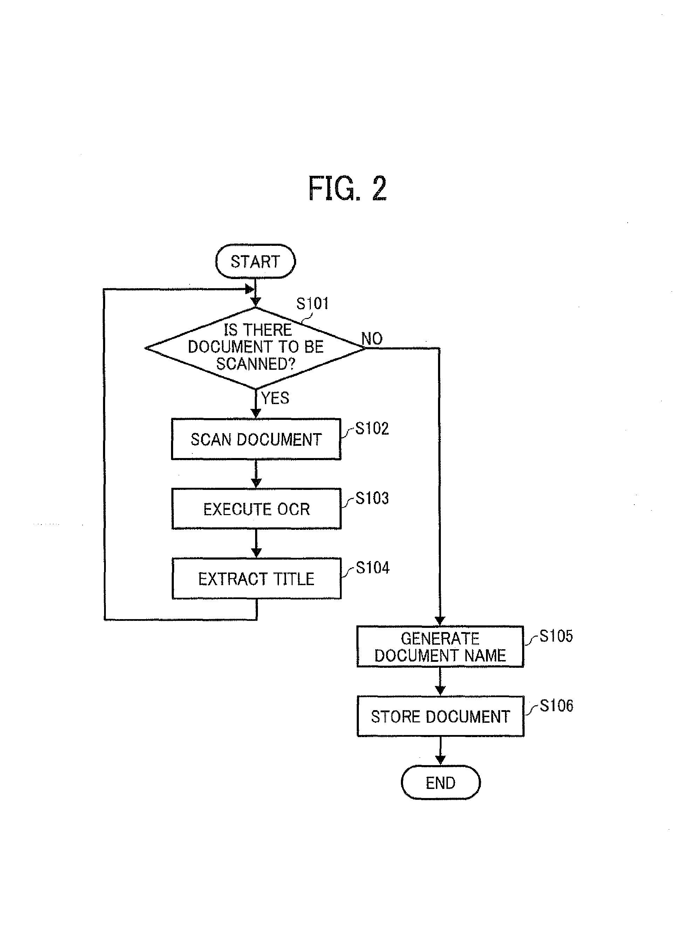

FIG. 2 is a flowchart illustrating a process of processing a document. The document processing apparatus 1 then generates a document name that expresses the content of imported document image data in.

That is, the document processing apparatus 1 checks whether or not there is a paper document to be scanned on the document feeder 11 in S101. If there is a paper document to be scanned on the document feeder 11 (YES in S101), after conveying one sheet from the document feeder 11 to the document scanner 12, the document scanner 12 scans the paper document at a predefined resolution, digitizes it, and outputs it to the document storage unit 16 and the OCR unit 13 in S102.

The OCR unit 13 executes an OCR process in S103. That is, the OCR unit 13 reads character data from the image data of the paper document scanned by the document scanner 12, adds additional information such as character image location that corresponds to the character data, character recognition score, and language processing result (location of word to which a character belongs and grammatical information such as word class) to the character data, and outputs it to the title generator 14 in S103.

The title generator 14 executes a characteristic string extracting process in S104. That is, the title generator 14 extracts a title string that expresses content of a page characteristically for the page of the document image data from the character data and the additional information input from the OCR unit 13 and outputs it to the document name generator 15 in S104.

After executing the document scanning process, the OCR process, and the characteristic string extracting process, the process goes back to S101, and the document processing apparatus 1 checks whether or not there is a paper document to be scanned on the document feeder 22 in S101. If there is the paper document to be scanned (YES in S101), the document processing apparatus 1 repeats the document scanning process, the OCR process, and the characteristic string extracting process until the paper document to be scanned runs out from S101 to S104.

If there is no paper document to be scanned (NO in S101), in the document processing apparatus 1, the document name generator 15 executes a document name generating process in S105. That is, the document name generator 15 generates a string suitable for a predefined output condition (e.g., a string whose length is suitable for the document name display area on the display where the document name is output) as the document name from the title string generated by the title generator 14 and outputs it to the document storage unit 16 in S105.

The document storage unit 16 associates the document image data (in case of multiple pages, the document image data combines the multiple pages) input from the document scanner 12 with the document name generated by the document name generator 15, and stores and manages them in the nonvolatile memory.

Also, in the document name generating process in S105, if the document image data is comprised of multiple pages, the document processing apparatus 1 generates a more suitable document name using the characteristic string extracting results for every page.

That is, it is considered that the title string in the first page expresses the whole document since the first page is usually expected to be the front page. However, in case the OCR unit 13 does not execute the character information extracting process appropriately, for example, the front page has a different tendency from the body pages and the document name is ornamentally written on the front page, or the front page is occupied with photos without characters, it is impossible to acquire the title string from the first page. Also, the OCR unit 13 does not acquire the title string if a blank sheet of white paper is inserted as a document delimiter.

Furthermore, the title generator 14 ranks the titles considering reliability of result of the character information extracting process, character sizes, and character location comprehensively.

Therefore, if the reliability of the character information extracting process executed by the OCR unit 13 is low, the evaluated value of the characteristic string extracting result by the title generator 14 also becomes low.

To cope with this issue, in the case of document image data comprised of multiple pages, the document name generator 15 utilizes the characteristic string extracting result for every page. For example, the document name generator 15 calculates the evaluated value of the characteristic string extracting result for each page, compares the evaluated value with predefined threshold value for the first page, and compares the evaluated value of the characteristic string extracting result for the next page with the predefined threshold value sequentially. If the document name generator 15 finds a page whose evaluated value of the characteristic string extracting result exceeds the predefined threshold value, the document name generator 15 uses the title string of that page as the document name.

Consequently, an appropriate document name can be generated in case the character information extracting capability is low.

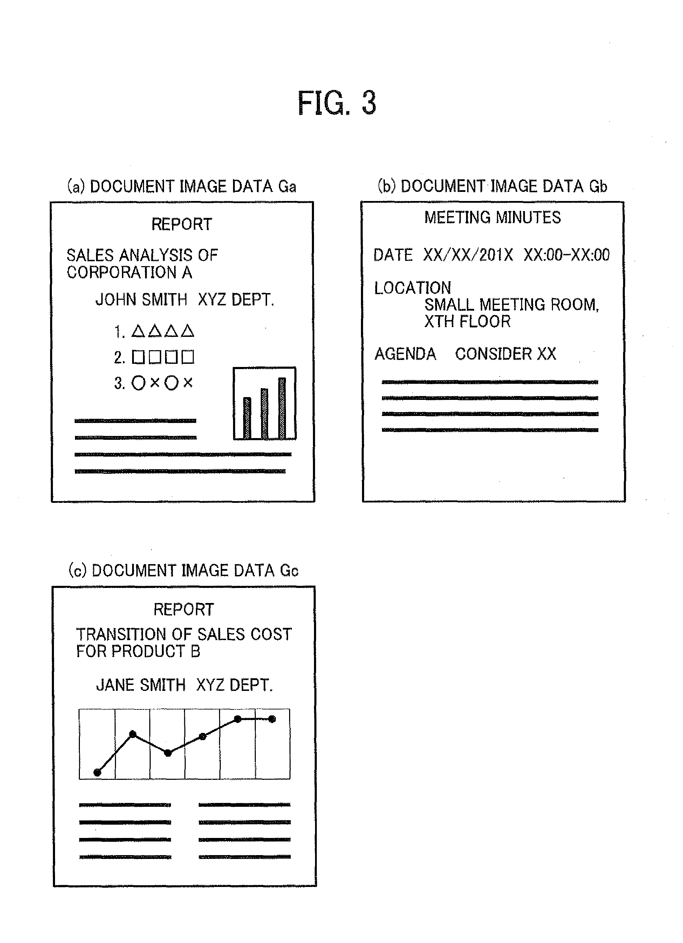

For example, as shown in FIG. 3, in case of processing three documents, there are document image data Ga of a report as shown in FIG. 3 (a), document image data Gb of minutes as shown in FIG. 3 (b), and document image data Gc of a report as shown in FIG. 3 (c). Since the title string tends to be located at the upper part of a page in large font as described above, title strings that predominantly express the content of the documents are extracted, such as "report" for the document image data Ga, "minutes" for the document image data Gb, and "report" for the document image data Gc using this tendency.

However, in the case of using these title strings as the document names, the document image data Ga is not distinguished from the document image data Gc since they have the same title string "report".

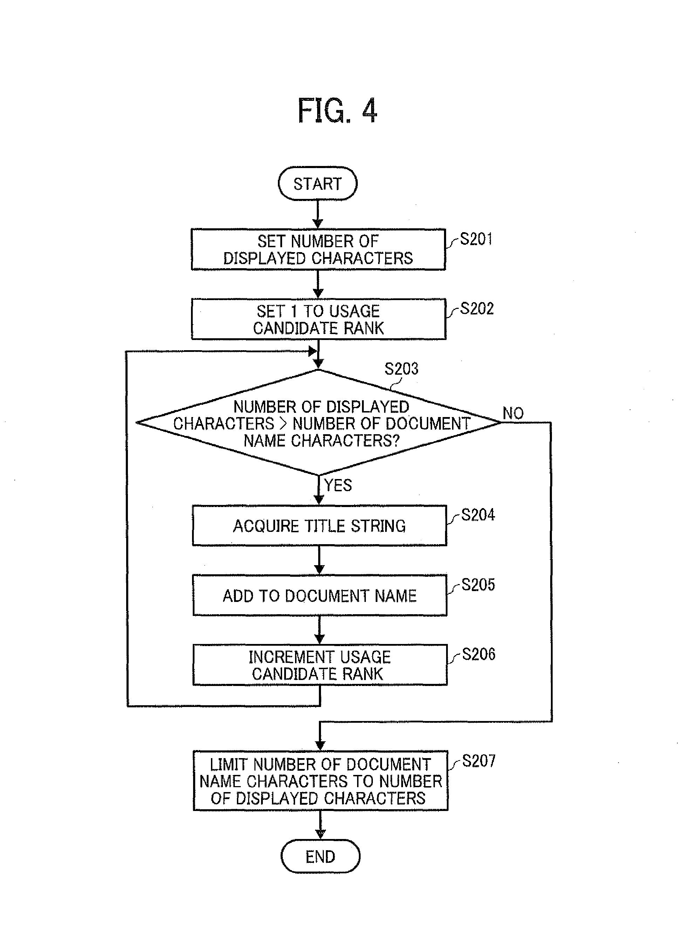

To cope with this issue, as shown in FIG. 4, the document name generator 15 can adopt title strings whose rankings are low up to the number of characters allowable for the document name (i.e., the number of characters displayable in the display area (the predefined number of characters)) using evaluated rankings based on the evaluated value described above. In this case, the document name generator 15 includes an evaluator 15a that ranks multiple title strings extracted by the title generator 14 evaluating their notability that expresses the content of the document image data and a string concatenating unit 15b that generates a string as the document name concatenating the title strings up to the predefined number of characters in accordance with the rankings provided by the evaluator 15a.

That is, first, the document name generator 15 sets a number of displayed characters as the number of characters allowable for the document name in S201. For example, in case the document processing apparatus 1 is applied to a certain apparatus, the number of characters displayable on the display unit of the certain apparatus can be set to the number of displayed characters.

The document name generator 15 sets 1 to a usage candidate ranking in S202 and checks if the current number of characters of the document name is less than the number of displayed characters (i.e., the number of displayed characters > the number of characters in the document name) in S203.

If the number of characters in the document name is less than the number of displayed characters (YES in S203), the document name generator 15 acquires the title string whose evaluated ranking equals the usage candidate ranking in S204, adds the title string to the document name in S205, and increments the usage candidate ranking by 1 in S206. Subsequently, the process goes back to S203 and starts checking if the number of characters in the document name is less than the number of displayed characters from S203 to S206.

After repeating the process from S203 to S206, if the number of characters in the document name becomes larger than the number of displayed characters (NO in S203), the document name generator 15 adjusts the string added lastly as the document name by limiting the number of characters in the document name to the number of displayed characters in S207, and the process ends.

Subsequently, in the case shown in FIG. 3, a string such as "report_sales analysis of corporation A" instead of "report" can be adopted as the document name for the document image data Ga in FIG. 3 (a), a string such as "minutes_date XX/XX/201X XX:00-XX:00" instead of "minutes" can be adopted as the document name for the document image data Gb in FIG. 3 (b), and a string such as "report_transition of sales cost for product B" instead of "report" can be adopted as the document name for the document image data Gc in FIG. 3 (c), and that makes it easier to ascertain each content of the document image data from the document name.

Usually, the title generator 14 adopts a string whose font size is relatively large in the page as the title string whose priority ranking is high as described above. In this case, that means that the number of characters that fits in a row in the page of the document image data decreases, thereby decreasing the number of characters to be adopted as the title string. Therefore, if just a title string whose evaluated ranking is the first is used as the document name, that results in making the document name short, and the short document name could be insufficient to choose desired document image data from among multiple document image data based on the document name.

However, as described above, the document name that can express the content of the document image data more characteristically can be adopted by concatenating the title strings up to the allowable number of characters as the document name based on the priority rankings (usage candidate rankings), thereby improving the usefulness of the document name.

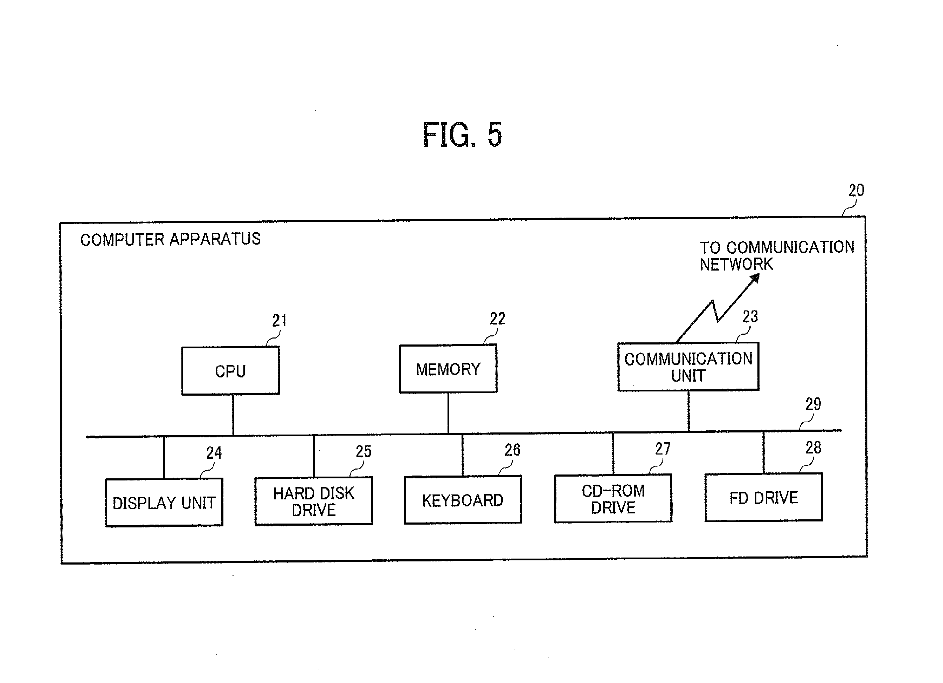

It should be noted that the process from scanning the document image data to generating the document name and storing the document is executed in the document processing apparatus 1 in the above description. However, processing the document is not limited thereto. For example, after the document scanner 12 incorporates document image data, the computer apparatus 20 shown in FIG. 5 receives the document image data from the document scanner 12 and executes processes such as the character information extracting process, the characteristic string extracting process, and the document name generating process by running software. Also, in this case, the computer apparatus 20 can execute the document storing process.

That is, the computer apparatus 20 includes components such as a CPU 21, a memory 22, a communication unit 23, a display unit 24, a hard disk drive (HDD) 25, a keyboard 26, a CD-ROM drive 27, and a Flexible Disk (FD) drive 28, and these are connected via a bus 29 with each other. Units described above such as the OCR unit, the title generator, the document name generator, and the document storage unit (in case of storing the document) can be implemented in the computer apparatus 20 by installing document processing programs of this invention on the HDD 25 etc.

In the computer apparatus 20, the CPU 21 generates the document name, associates the generated document name with the document image data, and stores it in the HDD 25, the CD-ROM inserted in the CD-ROM drive 27, or the FD inserted in the FD drive 28 by executing the character information extracting process, the characteristic string extracting process, and the document name generating process on the document image data imported from the scanner etc. by the communication unit 23 via a communications network such as Local Area Network (LAN) or internet based on the document processing programs installed in the HDD 25, etc.

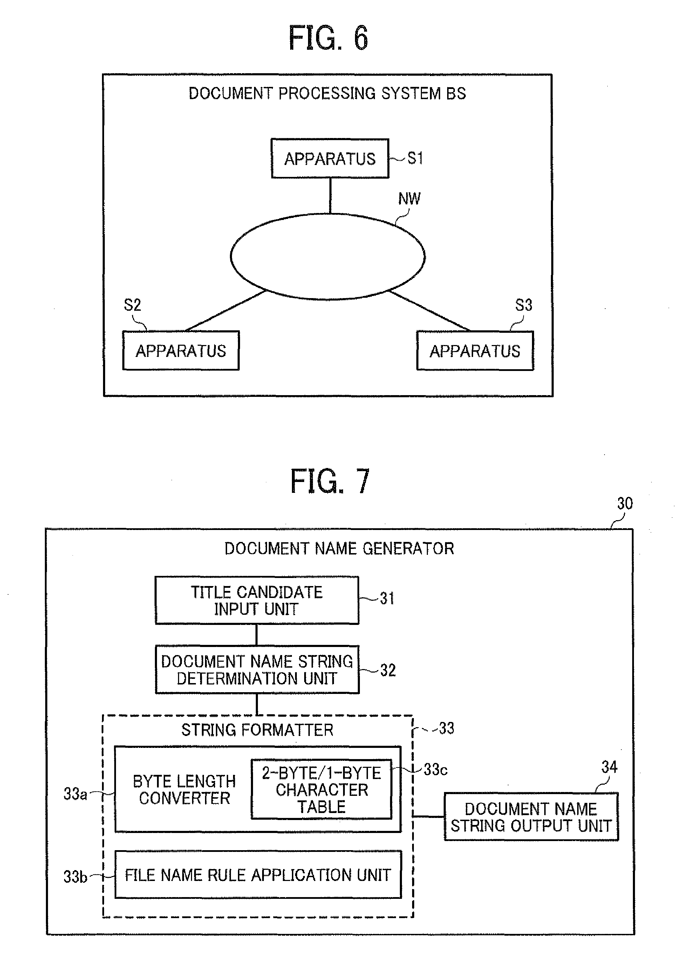

Also, as shown in FIG. 6, the document processing can be executed not only on one apparatus but also on multiple apparatuses S1, S2, and S3 that are connected with each other via a communications network NW such as a LAN or the internet and which comprise a document processing system BS.

In this case, for example, the document processing program for the character information extracting process is installed in the apparatus S1. The apparatus S1 executes the character information extracting process on the document image data acquired by incorporating from another apparatus such as the scanner (not shown) or scanning by itself and sends at least the result of the character information extracting process to the apparatus S2 via the communications network NW. The document processing program for the document title generating process is installed in the apparatus S2. After executing the characteristic string extracting process, the apparatus S2 sends the title string as the extracted result to the apparatus S3 via the communications network NW. The document processing program for the document name generating process is installed in the apparatus S3. After generating the document name from the title string sent from the apparatus S2, the apparatus S3 associates the document image data sent from the apparatus S1 or S2 with the document name and stores it in the nonvolatile memory in the apparatus S1 or in the storage device on the communications network NW.

As described above, the document processing apparatus 1 in this embodiment includes the OCR unit 13 (as the character information extractor) that extracts character information from the document image data, the title generator 14 (as the characteristic string extractor) that extracts the predefined number of strings that indicates the characteristic of the document image data as the title strings (the document name candidate strings) from the character information extracted by the OCR unit 13, and the document name generator 15 (as the document name generator) that generates the string suitable for the predefined output condition as a document name from title strings generated by the title generator 14. Therefore, the document name can be comprised of strings suitable for the output condition among the predefined number of title strings that indicate the characteristic of the document image data, and the document name that expresses the content of the document image data can be generated in accordance with the output condition.

Also, the document processing apparatus 1 as the document processor in this embodiment adds the document name to the imported document image data and stores it. The document processing apparatus 1 as the document processor is included in the image processing apparatus such as the MFP, the copier, and the scanner that displays the document name of the stored document image data on the display (display unit) in the control panel unit and executes outputting the document image data in response to outputting request on the document displayed on the display. Therefore, the document name can be comprised of strings suitable for the output condition among the predefined number of title strings that indicate the characteristic of the document image data, and the document name that expresses the content of the document image data can be generated in accordance with the output condition.

Furthermore, the document processing apparatus 1 in this embodiment executes the document processing method that includes the character information extracting step in which the character information is extracted from the document image data, the characteristic strings extracting step in which the predefined number of strings that indicates the characteristic of the document image data is extracted as the title strings from the character information extracted in the character information extracting process step, and the document name generating step in which the string suitable for the predefined output condition from the title strings extracted in the characteristic strings extracting step. Therefore, the document name can be comprised of strings suitable for the output condition among the predefined number of title strings that indicate the characteristic of the document image data, and the document name that expresses the content of the document image data can be generated in accordance with the output condition.

Also, the document processing apparatus 1 in this embodiment includes the document processing programs that execute the character information extracting process to extract the character information from the document image data, the characteristic string extracting process to extract the predefined number of strings that indicate the characteristic of the document image data as the title strings from the character information extracted in the character information extracting process, and the document name generating process to generate the string suitable for the predefined output condition as the document name from the title strings extracted in the characteristic string extracting process. Therefore, the document name can be comprised of strings suitable for the output condition among the predefined number of title strings that indicate the characteristic of the document image data, and the document name that expresses the content of the document image data can be generated in accordance with the output condition.

Furthermore, the document processing apparatus 1 in this embodiment includes the evaluator 15a that the document name generator 15 ranks the multiple title strings extracted by the title generator 14 evaluating the notability that indicates the content of the document image data, and the string concatenating unit 15b to generate the document name concatenating the title strings up to the predefined number of characters in accordance with the evaluated order. Therefore, the document name can be comprised of strings suitable for the output condition among the predefined number of title strings that indicate the characteristic of the document image data, and the document name that expresses the content of the document image data can be generated in accordance with the output condition.

Also, the document processing apparatus 1 in this embodiment includes the evaluator 15a in which the title generator 14 extract the string that indicates the characteristic of the page in the document image data for each page in case the document image data comprises multiple pages and the document name generator 15 evaluates the strings extracted by the title generator 14 as the document name, and the evaluation controller 15c that generates the string whose length is the predefined number of characters exceeding the threshold value after having the evaluator 15a evaluate from the first page to the last page of the document image data up to the length of the string whose evaluated result exceeds the predefined threshold value becomes the predefined number of characters. Therefore, the string that indicates the content of the whole document image data characteristically can be generated as the document name, and that makes it more appropriate to choose the document image data by the document name.

### Second embodiment

FIG. 7 is a block diagram illustrating a configuration of a document name generator 30 in a document processing apparatus as a second embodiment of the present invention.

It should be noted that the second embodiment is applicable to a document processing apparatus as with the document processing apparatus 1 in the first embodiment, and in the detailed description below the same reference symbols are used for components as those in the document processing apparatus 1 in the first embodiment.

The document processing apparatus 1 in the second embodiment includes the document feeder 11, the document scanner 12, the OCR unit 13, the title generator 14, the document storage unit 16, and a document name generator 30 shown in FIG. 7. The document name generator 30 includes a title candidate input unit 31, a document name string determination unit 32, a string formatter 33, and a document name string output unit 34.

After being input title strings from the title generator 14, the title candidate input unit 31 inputs the title strings into the document name string determination unit 32.

The document name string determination unit 32 selects document name candidate strings that express the content of the document image data noticeably from the title strings input from the title candidate input unit 31 and inputs the document name candidate strings to the string formatter 33.

The string formatter 33 includes a byte length converter 33a and a file name rule application unit 33b and converts a character into a character that has the same meaning and is expressible with a smaller byte length.

The byte length converter 33a (a character selecting unit) includes a 2-byte/1-byte character table 33c as a character-byte association table in which characters that have the same meaning and are expressible with different byte lengths are registered in association with their byte lengths. In the 2-byte/1-byte character table 33c, 2-byte characters that have corresponding 1-byte characters are registered associated with the 1-byte characters. That is, 2-byte characters are comprised of 2 bytes of data, and 1-byte characters are comprised of 1 byte of data and take up half the space of 2-byte characters. Therefore, in case the display area for the document name is limited, more 1-byte characters can be displayed in the same display area, and that makes the document name more comprehensible since more information can be included in the document name.

Also, the byte length converter 3 3 a not only converts a 2-byte character into a 1-byte character with reference to the 2-byte/1-byte character table 33c but also acquires the document name candidate string from the document name, chooses characters up to the number of characters displayable in the display area, and concatenates them with the document name. That is, the byte length converter 33a includes the 2-byte/1-byte character table 33c as the character-byte association table that registers characters that have the same meaning expressible with different byte lengths and functions as a character selection unit that chooses a character with a smaller byte length (1-byte character) for a character (2-byte character) included in the candidate string for the document name and registered in the 2-byte/1-byte character table 33c. For example, in case 10 2-byte characters can be displayed in the display area, 20 1-byte characters can be displayed in the same display area. Also, many 2-byte letters, numbers, and symbols have corresponding 1-byte characters, such as "A" and "?".

Therefore, in case the document names are "Q&A regarding this case" (where "Q", "&", and "A" are 2-byte characters) and "Declaration of Independence, 7/4/1776" (where "7/4/1776" is written in 2-byte characters) for example, the byte length converter 33a converts 2-byte characters expressible with 1-byte characters in the document name into the corresponding 1-byte characters, thereby shortening the string length and enabling to add more characters to the document name. Consequently, it becomes easier to comprehend the content of the page from the document name.

Also, since some displaying apparatuses that display document names have rules such as limiting the displaying number of characters and prohibiting use of some characters, the file name rule application unit 33b fits the document name into such rules.

In particular, it is prohibited to create file names that include characters already reserved by the system, such as "¥, /, :, *, ?, ", <, >, |", and the maximum file name length is also limited on Microsoft Windows.

Therefore, in case the document name includes prohibited characters, the file name rule application unit 33b converts the prohibited characters into appropriate characters and trims the document name if the document name is longer than the limited maximum file name length.

Also, the document name string output unit 34 outputs the document name generated by the string formatter 33 to the document storage unit 16.

That is, in the document name generator 30 in this embodiment, the title candidate input unit 31 receives the title string from the title generator 14 and sends it to the document name string determination unit 32, and the document name string determination unit 32 chooses the document name candidate string that expresses the content of the document image data noticeably and inputs it to the string formatter 33.

In the string formatter 33, the byte length converter 33a converts convertible 2-byte characters in the document name candidate string chosen by the document name string determination unit 32 into the corresponding 1-byte characters with reference to the 2-byte/1-byte character table 33c, and the file name rule application unit 33b creates the document name applying the rule to the document name if the apparatus that outputs the document image data with the document name has rules on prohibited characters.

As described above, in the document processing apparatus 1 in this embodiment, the document name generator 30 includes the 2-byte/1-byte character table 33c (character-byte association table) that registers characters expressable with different byte length with its byte length and the byte length converter 33a (the character selection unit) that chooses 1-byte characters for 2-byte characters registered in the 2-byte/1-byte character table 33c in the title string. Therefore, a document name including more characters for the display area can be created, thereby creating a document name that expresses the content of the document image data more appropriately in accordance with the output condition.

It should be noted that the document name string needs to be output precisely on the output apparatus that outputs the document name created by the document processing apparatus 1 in order to enable selection of the stored document image data using the document name.

Consequently, the document processing apparatus 1 in this embodiment converts the document name into the string comprised of ASCII codes that can be output regardless of the output apparatus if the created document name includes characters that could not otherwise be output by the output apparatus.

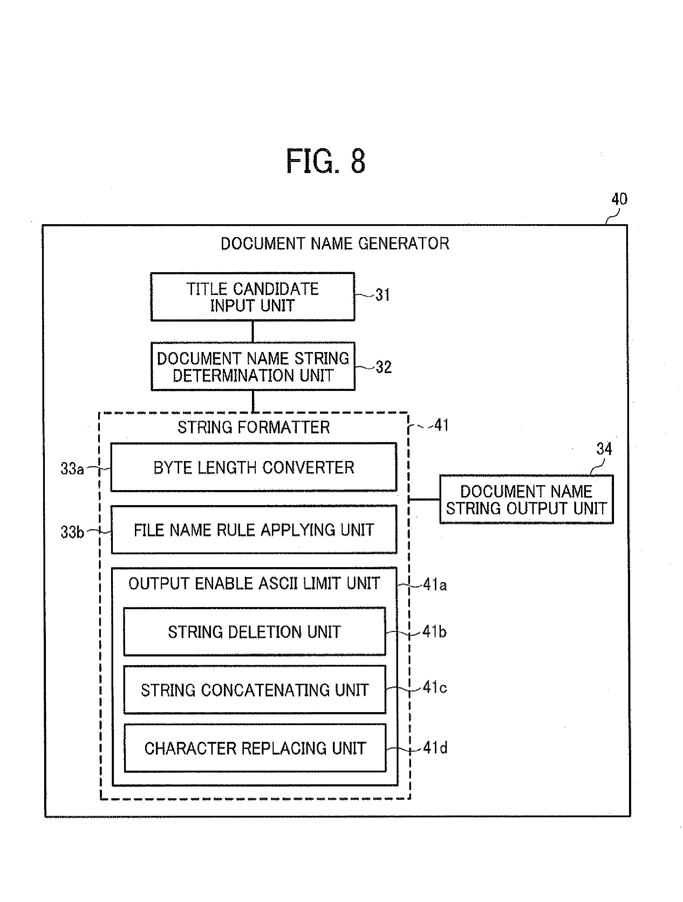

In this case, as shown in FIG. 8, the document name generator 40 converts the document name into the string comprised of ASCII codes that can be output regardless of the output apparatus and outputs it by adding an output enable ASCII limit unit 41a to the string formatter 41 compared to the document name generator 30.

That is, the document name generator 40 includes the string formatter 41 in addition to the title candidate input unit 31, the document name string determination unit 32, and the document name string output unit 34 as same as the document name generator 30 in FIG. 7, and the string formatter 41 includes the output enable ASCII limit unit 41a in addition to the byte length converter 33a and the file name rule application unit 33b as same as the string formatter 33.

The output enable ASCII limit unit 41a (a string deletion unit 41b, a string concatenating unit 41c, and a character replacing unit 41d) includes an ASCII code table. For example, the ASCII code table includes characters except control codes, in particular, the space character whose ASCII code is 32 (decimal), the letters, the numbers, the punctuation characters, and the symbol characters whose ASCII codes are between 33 (decimal) and 126 (decimal).

After character codes of the document name string converted by the byte length converter 33a and processed by the file name rule application unit 33b are input to the output enable ASCII limit unit 41a, the output enable ASCII limit unit 41a adopts characters that have corresponding ASCII codes in the document name string as the document name and deletes non-ASCII characters.

For example, after the byte length converter 33a converts 2-byte characters in the document name string into 1-byte characters as described above and generates the document name string "Declaration of Independence, 7/4/1776" comprised of SJIS codes, the output enable ASCII limit unit 41a generates the document name string that includes "Q&A" and "741776" by adopting ASCII code characters for the document name string, deleting non-ASCII characters and generates the document name string by concatenating ASCII characters up to the displayable number of characters.

Also, since printable ASCII code characters are the most versatile character set among character codes used in the world, the document name comprised of printable ASCII code characters can be output, for example, displayable on various apparatuses.

Furthermore, if ASCII code characters are used for the document name, it becomes less effective to comprehend the content of the document since some parts of the original title string are used for the document name. However, that string reflects the content of the document better than a document name generated automatically regardless of the content of the document such as a date sequential string.

Also, regarding languages that uses accented characters such as umlaut in German, etc., outputting garbled characters on an apparatus that does not have the capability to output the accented characters can be prevented by using printable ASCII characters.

Furthermore, some languages prescribe ASCII characters in substitution for non-ASCII code characters. In this case, regarding non-printable ASCII characters, the output enable ASCII limit unit 41a not only deletes the non-printable ASCII characters but also replaces the non-printable ASCII characters with substitute characters if possible and concatenates them. That is, the output enable ASCII limit unit 41a functions as a character substituting unit 41d and the string concatenating unit 41c.

For example, in German, printable ASCII characters can be used in substitution for accented characters as shown below.
The German sharp s: "ss"
A umlaut (lowercase): "ae"
A umlaut (uppercase): "Ae"
O umlaut (lowercase): "oe"
O umlaut (uppercase): "Oe"
U umlaut (lowercase): "ue"
U umlaut (uppercase): "Ue"

Also, in case a substitute character is not prescribed for a non-ASCII character, the output enable ASCII limit unit 41a replaces the non-ASCII character with a predefined ASCII character such as "_" instead of just deleting the non-ASCII character.

It should be noted that the document name is comprised of the title string acquired from the document image data in creating the document name in the above description. However, creation of the document name is not limited to use of the title string, and alternatively date or a predefined sequential string can be combined with the title string to create the document name.

As described above, in the document processing apparatus 1 of this embodiment, the document name generator 30 includes the 2-byte/1-byte character table 3 3 c as a character-byte association table in which characters that have the same meaning and are expressable with different byte length associated with its byte length and the byte length converter 33a (the character selection unit) that chooses 1-byte characters for 2-byte characters registered in the 2-byte/1-byte character table 33c in the title string. Therefore, it is possible to create a document name that expresses the content of the document image data in accordance with the output condition as well as to increase the number of characters in the document name and to use more strings that express the content of the document image data characteristically for the document name, thereby further improving the availability of the document name.

Also, in the document processing apparatus 1 of this embodiment, the document name generator 40 includes the output enable ASCII limit unit 41a includes the string deletion unit 41b that deletes non-ASCII characters in the title string and the string concatenating unit 41c that creates the document name by concatenating the title string processed by the string deletion unit up to the predefined number of characters. Therefore, a document name comprised of ASCII characters without garbled characters or output of otherwise unsupported characters can be created, thereby enabling selecting the document image data by the document name appropriately regardless of output apparatus.

Also, in the document processing apparatus 1 of this embodiment, the document name generator 40 includes the output enable ASCII limit unit 41a that includes the character replacing unit 41d that replaces the non-ASCII character in the title string with the predefined ASCII character and the string concatenating unit 41c that creates the string as the document name concatenating the ASCII characters in the title string with the ASCII characters replaced by the character replacing unit 41d. Therefore, the document name can be comprised of ASCII characters that can be output without garbled characters or characters unable to be output on the output apparatus by replacing non-ASCII characters with ASCII characters without deleting them, thereby enabling selection of document image data by the document name more appropriately regardless of output apparatus.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any conventional storage medium or carrier medium. The carrier medium can include transient carrier media that transmit computer code such as electricity, light, high frequency wave, sound, and radio frequency signal. An example of such transience is a TCP/IP signal that transmits computer code on a IP network such as the Internet. The carrier medium can include storage media that store processor-readable code such as a floppy disk, a hard disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic tape, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or nonvolatile memory. The HDD may be implemented by any desired kind of nonvolatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Numerous additional modifications and variations are possible in light of the above teachings. It is therefore to be understood that, within the scope of the appended claims, the disclosure of this patent specification may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

## Claims

1. A document processing apparatus (1), comprising:
a character information extractor to extract character information from document image data;
a characteristic string extractor to extract a predefined number of strings that indicate characteristics of the document image data as a candidate string for a document name from the character information extracted by the character information extractor; and
a document name generator (15) to generate a string suitable for a predefined output condition as the document name from the candidate string for the document name extracted by the characteristic string extractor.

2. The document processing apparatus (1) according to claim 1, wherein the document name generator (30) comprises:
a character-byte association table to register characters that have the same meaning and are expressable with different byte lengths in association with their byte lengths; and
a character selection unit to choose a character with a smaller byte length (1-byte character) for a character (2-byte character) included in the candidate string for the document name and registered in the character-byte association table.

3. The document processing apparatus (1) according to any one of claims 1 to 2,
wherein the document name generator (15) comprises:
an evaluator (15a) to rank the multiple candidate strings for the document name extracted by the characteristic string extractor by evaluating notabilities that express the content of the document image data; and
a string concatenating unit (15b) to generate a string as the document name concatenating the candidate strings for the document name up to a predefined number of characters in accordance with the ranking provided by the evaluator (15a).

4. The document processing apparatus (1) according to any one of claims 1 to 3,
wherein the document name generator (40) comprises:
a string deletion unit (41b) to delete non-ASCII characters in the candidate string for the document name; and
a string concatenating unit (41c) to create the document name by concatenating the candidate strings for the document name processed by the string deletion unit up to the predefined number of characters.

5. The document processing apparatus (1) according to any one of claims 1 to 3,
wherein the document name generator (40) comprises:
a character replacing unit (41d) to replace a non-ASCII character in the candidate string for the document name with a predefined ASCII character; and
a string concatenating unit (41c) to create a string as the document name concatenating ASCII characters in the candidate string for the document name with the ASCII characters replaced by the character replacing unit (41d).

6. The document processing apparatus (1) according to any one of claims 1 to 2,
wherein the characteristic string extractor extracts strings that indicate the characteristics of a page in the document image data for each page of document image data comprising multiple pages, and the document name generator (15) comprises:
an evaluator (15a) to evaluate the strings extracted by the characteristic string extractor as the document name; and
an evaluation controller (15c) to generate a string whose length is a predefined number of characters exceeding a predefined threshold value after having the evaluator (15a) evaluate from the first page to the last page of the document image data.

7. A method of processing a document, comprising the steps of:
extracting character information from document image data;
extracting a predefined number of strings that indicate characteristics of the document image data as a candidate string for a document name from the character information extracted in the character information extracting step; and
generating a string suitable for a predefined output condition as the document name from the candidate string for the document name extracted in the characteristic string extracting step.

8. A non-transitory recording medium storing a program that, when executed by a computer, causes the computer to implement a method of controlling supplying electric power in an image forming apparatus,
the method comprising the steps of:
extracting character information from document image data;
extracting a predefined number of strings that indicate characteristics of the document image data as a candidate string for a document name from the character information extracted in the character information extracting step; and
generating a string suitable for a predefined output condition as the document name from the candidate string for the document name extracted in the characteristic string extracting step.
